Europäisches Patentamt

(19) European Patent Office

Office européen des brevets

(11) Publication number : 0 550 080 A1

# (12) EUROPEAN PATENT APPLICATION

(21) Application number : 92203205.7

(22) Date of filing : 19.10.92

(51) Int. Cl.$^5$ : G07C 5/00, G06K 11/00

(30) Priority : 18.10.91 NL 9101746

(43) Date of publication of application :
07.07.93 Bulletin 93/27

(84) Designated Contracting States :
AT BE CH DE DK ES FR GB GR IE IT LI LU MC
NL PT SE

(71) Applicant : Dekkers, Wouterus Hendrikus
Maria
Dwarsland
NL-5324 EH Ammerzoden (NL)

(72) Inventor : Dekkers, Wouterus Hendrikus Maria
Dwarsland
NL-5324 EH Ammerzoden (NL)

(74) Representative : de Bruijn, Leendert C. et al
Nederlandsch Octrooibureau
Scheveningseweg 82 P.O. Box 29720
NL-2502 LS Den Haag (NL)

(54) Method and device for the automatic processing of data recorded on a tachograph chart.

(57)    Method and device for the computer-assisted processing of data graphically recorded on a tachograph chart, the chart being scanned optically and the optical signal obtained being converted into a digital signal corresponding to the scanned graphical data. The chart is scanned according to a dot pattern encompassing, wholly or partly, at least the recording surface of said chart, a digital representation being formed of the scanned dots and being stored in a memory for further processing. A starting point for the interpretation of the stored digital representation is found by determining the relative memory position of a reference representation. In addition to optical-scanning and conversion means, the device comprises a slide mechanism for supporting a chart which is to be scanned, and can be incorporated in a standard rack of a personal computer.

fig-1

The invention relates to a method and device for the computer-assisted processing of data graphically recorded on a tachograph chart, the chart being scanned optically according to a dot pattern encompassing, wholly or partly, at least the recording surface of the chart, and the optical signal obtained being converted into an electrical signal corresponding to the scanned graphical data, said electrical signal being stored under the control of the computer in a memory for further processing. The device for scanning data graphically recorded on a tachograph chart comprises optical scanning means, means for supporting a chart to be scanned, and means for converting the optical signal obtained into a digital signal.

Tachographs are instruments which graphically record a number of parameters of vehicles, in particular of lorries and buses, in the form of curves on a chart, called a tachograph chart. The most common parameters are the driving and rest periods of the vehicle, the distance covered by the vehicle and the instantaneous driving speed. These curves are recorded, with the aid of one or more needles or pens, on concentric tracks on the chart which, in contrast to an everyday analog clock, rotates only once, rather than twice, in one day (24 hours). The information corresponding to the driving and rest periods of the vehicle is recorded, for example, in the form of a histogram or bar diagram, while the speed is recorded in the form of a signal of varying amplitude.

This recording process always has, as its physical centre, the centre of the tachograph chart which, for the purpose of its positioning, has a generally pear-shaped aperture which corresponds to a pear-shaped boss in the tachograph. Charts having a circular aperture also exist, in which case the chart has to be positioned in the tachograph by means of a marking provided on the surface of the chart.

Each point on a written information track now has two attributes:
- it corresponds to a particular point of time, and
- it forms part of a record which represents a particular activity.

The data recorded on a tachograph chart must be processed on the basis of statutory requirements for the purpose of inspection, in particular with regard to the requirements concerning the mandatory rest periods, and for calculating data relating to the distance covered by the vehicle and the like which are important to a company. An analysis of the speed recording may, for example, be necessary in the event of an accident or the like.

The analysis and processing of the data recorded on a chart is today still fairly widely carried out in practice by means of a semi-automatic system, the chart being examined, by a person trained for this purpose, by means of a magnifying glass, and the visual information being entered by hand, via a keyboard, into a computer for further processing.

The patent literature discloses systems for the completely automatic read-out of tachograph charts, but these systems are not used in practice, or at any rate not on a large scale, owing to their relatively high acquisition cost, among other reasons.

US Patent 3,908,081 describes a device in which the chart is placed on a turntable for the purpose of reading out particular sectors or the whole recording surface of the chart. The chart surface in question is scanned continuously line-by-line by means of a TV camera in such a manner that only the recordings which are present on the chart are transferred, together with the instantaneous position of the scanning beam on the chart. In order to define the position of the beam on a chart accurately when scanning a recording, a high degree of synchronisation between the movement of the scanning beam and the rotation of the chart is required.

US Patent 4,128,755 describes a device for reading out a tachograph chart by means of a radially positioned linear group of photodiodes, the chart being rotated. In this device, the position and the number of activated photodiodes corresponding to a sector of the chart are stored as scanned information. In order to achieve reliable processing of the results, this system, too, requires accurate synchronisation between the position of the chart and the stored information.

US Patent 3,829,660 also discloses a system which uses a radially positioned linear group of optical detectors to scan a recording chart containing graphical data. The electrical signals from the detectors can be preselected via a plug-in wire connector board, the signals from several detectors being combined via said connector board into a number of channels and being stored, via a processor under the addition of time-control and reference information, in a memory for further processing.

Netherlands Patent Application 74,14963 also relates to the radial scanning of a rotating chart, evaluation windows corresponding to a particular area of the chart being defined. The required data are then obtained by digital summation of the video impulses occurring within an evaluation window. It will be obvious that, in this case, accurate synchronisation between the position of the chart and the ultimately stored data is again required, such that reliable processing can be achieved.

The object of the invention is, therefore, in the first instance, to provide a method for the computer-assisted processing of data graphically recorded on a tachograph chart, without the need to add, for the purpose of enabling a correlation between the stored data and their position on the chart, synchronisation signals or identification signals which have to be accurate and which are therefore expensive and complicated to generate.

According to the invention this is therefore achieved in that a digital representation is formed of all the dots scanned and is stored in the memory for further processing.

In the method according to the invention, the digital representation of the scanned dots, which encompass part of, but preferably the whole of, the recording surface of the tachograph chart, is stored as a whole in a memory for further processing. In contrast to the state of the art, the scanned signals are not precombined or otherwise interpreted, in the form of the addition of synchronisation signals or other flags, for the purpose of correlation of the signals and their specific position on the recording surface of the chart.

For the purpose of interpreting the stored digital representation, the further processing in one embodiment of the method according to the invention comprises the localisation, in the stored digital representation, of the relative memory position or memory positions of a digital part-representation corresponding to a marking or to markings present on the chart and, based thereon, the determination of the relative memory position or memory positions of a reference representation as the starting point for the interpretation of the stored digital representation of the graphical data of said chart.

This manner of determining the starting point for interpreting the stored digital representation can be implemented relatively simply and reliably, entirely by means of software, without the need for supplementary reference markings and/or flags, generated by electronic circuits susceptible to interference, for the correct processing of the scanned chart data.

It should be noted that British Patent Application 2,143,635 and International Patent Application WO-A-8,603,867 describe systems for scanning a tachograph chart, in which the scanned signals are supplied in digital form to a microprocessor which converts the graphical information on the chart into alphanumerically readable information. The manner in which the chart is scanned and the scanned signals are stored and processed by the microprocessor, cannot however, be gathered from these publications.

In the preferred embodiment of the method according to the invention, for processing charts having an aperture in the centre, said aperture being used as marking for the rough determination of the reference representation, the relative memory position or memory positions of the digital representation of at least one further standard marking present on the chart being determined on the basis of the localised relative memory positions of the digital part-representation corresponding to said aperture.

From the known position of the aperture on the chart and the at least one additional standard marking, which may, for example, indicate the type of chart, and with the aid of knowledge about how the scanned data are ordered in the memory, the relative memory position of the reference representation can then be calculated unambiguously. Preferably, the relative memory position of the digital representation corresponding to the centre of the chart is determined as a reference representation.

Clearly, as the number of scanned dots increases, the data recorded on the recording surface of the chart can be analysed more accurately. In practical embodiments of the method according to the invention, the number of scanned dots may be of the order of magnitude of 1.5 million or even higher. For the purpose of rapid determination of the reference representation it is therefore important to restrict the memory area to be investigated as much as possible.

In yet another embodiment of the method according to the invention, by scanning the chart in a predetermined fixed position, the localisation of the relative memory position or memory positions of the digital representation of the markings being achieved by using predetermined statistical data relating to the relative memory positions of the markings in the stored digital representation of the chart, the digital part-representation stored in the memory positions which, according to the statistical data, are eligible being compared, with the aid of a mask representation of the markings, for matching with said mask representation. The process of searching for the reference representation is considerably accelerated in this manner.

Said statistical data may be compiled, in yet another method according to the invention, from previous scans of charts, so that tolerance variations in the fixed position of the chart in different read-out systems can be compensated automatically.

In order to interpret the memory content it is also necessary, in addition, for example, to recognising the type of chart, to know the form and sequence in which the digital representation is stored in the memory.

In the preferred embodiment of the invention, the dot pattern has a matrix form composed of rows and columns, the digital representation being stored in the memory corresponding to the order of the dots, in such a manner that each dot of the pattern corresponds to a relative memory position and is represented by a 1-bit digital representation.

Because a particular dot of the pattern can only be in two different states, i.e. written or unwritten, a 1-bit digital representation thereof is sufficient, the written state, for example, corresponding to the digital value one while the unwritten state is represented by the digital value zero. The separate storage, in the memory, of the 1-bit digital values for each pixel, in a sequential order corresponding to the sequential order of the pixels, is particularly advantageous with regard to the software for analysing the representation in question. It is, however, clear to a person skilled in the art that the digital representation can be stored in the memory in various ways, one possibility being, for example, the storage of only those scanned dots with the digital value one or of only those scanned dots with the digital value zero. This does then require the addition of a code indicating the mutual relationship of the scanned dots.

As already described in the preamble, the data are recorded on the chart in the form of tracks which are concentric relative to the centre of the chart, the angle relative to a fixed starting position of the chart representing a particular time interval. These tracks are present as part-representations in the digital representation of a scanned chart.

According to an embodiment of the method according to the invention, the stored digital representation of the graphical data is analysed in accordance with the step-wise tangential traversal, from the centre of the chart and the fixed starting position thereof, of the whole chart area or of part thereof, the digital part-representation, stored at the relative memory positions corresponding to the dots obtained from the corresponding step-wise tangential traversal of the dot pattern, being analysed.

In this instance, the standardised format of the tachograph chart is used to advantage, it being known in advance which tracks carry which information and what the width of such a track is. This knowledge is also used to advantage in yet another embodiment of the method according to the invention, in that the relative memory positions associated with an information track are determined roughly with the aid of a mask representation of said information track, so that it is necessary to analyse only a limited number of memory positions, which benefits the processing speed. To analyse, for example, a single information track of the chart, processing can be restricted to only that digital part-representation which corresponds to said information track.

As a result of the analysis, an embodiment of the method according to the invention provides the presentation, in alphanumeric form, of one or more of the following parameters:

- the type of an event, based on the information track in question and on the digital part-representation of the data recorded therein;
- the time that the event occurred, based on the number of tangential steps from the starting position up to the occurrence of the event;
- the time between successive corresponding events, based on the number of tangential steps between corresponding digital part-representations of the information track in question.

In order to provide a compact and handy presentation, events having a duration which is less than a predetermined timespan are interpreted as one continuous event, in a further method according to the invention. In essence this is a form of filtering in order to prevent, for example, damage to the recording surface of the chart, in the form of scratches and the like, being interpreted as an event.

In order to provide as complete a display as possible, for example in the form of a journey report of a particular vehicle or a particular driver, the alphanumeric presentation is processed in combination with further information stored in the memory. This further information can, for example, be stored in the memory by means of a keyboard under the control of the computer. If required, the alphanumeric presentation can be reproduced on a monitor or a printer unit as a display with a different colour or form, for example for inspection purposes or the like.

Because, in the case of the method according to the invention, the digital representation of the scanned chart is examined for a reference representation by means of software, whereby it is consequently unnecessary to add information concerning the position of the scanned dots on the chart, it will be obvious that the scanning process can take place completely independently of the further processing of the digital representation of a scanned chart.

Consequently, the invention also provides a device for scanning data graphically recorded on a tachograph chart, in which the support means are constructed in the form of a slide mechanism comprising a frame having bearing means for the movable bearing of the slide, the part of said slide which is intended to support the chart being made of optically transparent material for receiving the recording surface of the chart, and having driving means for bringing the slide into a position which is accessible from outside the frame, for the purpose of receiving the chart to be scanned, and by means of which the slide, for scanning the chart, can be brought within the range of the scanning means mounted in the frame.

In the preferred embodiment of the device according to the invention, said device is provided with scanning means of the type having a scanning window for line-by-line scanning, control means being provided for moving the slide past the scanning window. Preferably, the driving means for moving the slide are controlled with the aid of the computer or processor by means of which the digital representation of the scanned data is processed.

In a practical embodiment of the device according to the invention, a chart is scanned as the slide is moved from its externally accessible position into the frame, the slide, after scanning, being returned to its position which is accessible from outside the frame, for the purpose of removing the scanned chart. In this manner it is possible to read in several charts very quickly, for example in order to put together a journey report on the basis thereof, as mentioned above.

The invention is described below in more detail by reference to the appended drawings of one embodiment.

Figure 1 shows schematically a tachograph chart as used in an automatic tachograph.

Figure 2 shows an overall electric block diagram of a device for implementing the method according to the invention.

Figure 3 shows schematically part of a top view of a device for scanning a tachograph chart according to the invention.

Figure 4 shows schematically, partly a cross-sectional view along the line IV-IV in Figure 3.

Figure 5 shows schematically, partly a cross-sectional view along the line V-V in Figure 3.

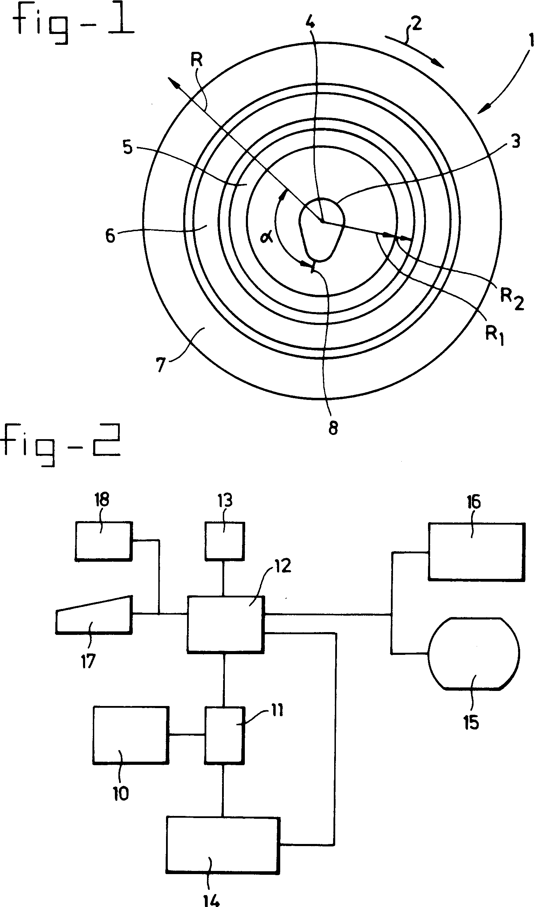

The tachograph chart 1 shown in Figure 1, which is rotated in the direction of the arrow 2, is provided with a pear-shaped cut-out 3 with centre 4 for the accurate positioning of the chart 1 in a tachograph (not shown).

The chart 1 in the example shown contains three information tracks, a first track 5 containing information on the distance covered, a second track 6 concerning the driving and rest times of the vehicle, and a third track 7 which records the speed of the vehicle in the form of a signal of varying amplitude.

Those points on the information tracks which are situated on a radius R from the centre 4 of the chart 1 all correspond to the same recording instant. In addition to these information tracks, the chart also contains other markings, such as, for example, a zero or starting position line 8, and there is space for noting down the name of the driver and/or a vehicle number or other identification.

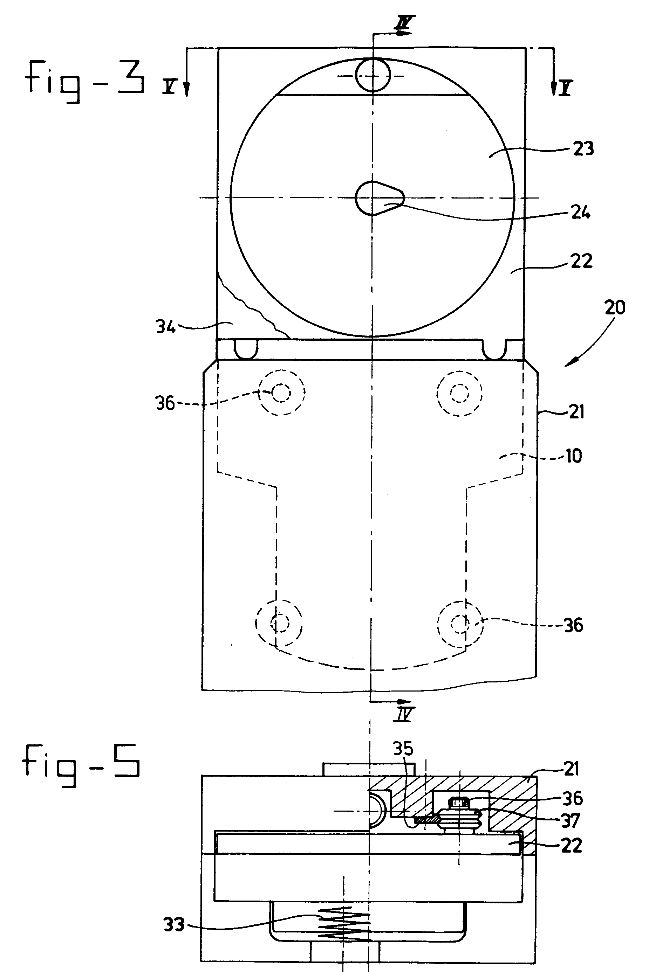

In the overall electric block diagram shown in Figure 2, the index number 10 indicates an optical scanning unit provided with a control unit 11 of its own. This control unit 11 is, on the one hand, effectively coupled to a microprocessor or computer 12, which microprocessor or computer 12 is provided with a non-volatile memory 13 in which the control and processing software is stored, and, on the other hand, is coupled to an electric rewritable memory 14, which memory 14 is also accessible from the microprocessor or computer 12.

The microprocessor or computer 12 may be of a conventional type, for example a personal computer provided with communication ports for communicating with the control unit 11. The size of the memory 14 is obviously determined by the number of dots to be scanned and by the manner in which the digital representation is stored.

A chart can, in principle, be scanned according to any dot pattern chosen, for example according to a polar coordinate system with a scanning window in a radial direction and with relative movement between the chart and the scanning window in a tangential direction.

In the preferred embodiment of the method according to the invention a scanning unit is preferably used which scans according to a dot matrix composed of rows and columns. To this end, use can be made of a scanning unit of the type having a scanning window for line-by-line scanning, the chart being scanned line-by-line by means of a relative linear movement between the scanning unit and the chart. It is, of course, also possible to use a scanning unit having a moving scanning beam, the chart and the scanning unit being in a fixed position in respect to one another during scanning. A video camera or the like can be used for this purpose. An optical scanning unit having a scanning window for line-by-line scanning, however, has the advantage of high resolution for the purpose of analysing the recorded data, resulting, for example, in 1.5 million or more scanned dots. In a practical embodiment, a file with a size of at least 158 x 1242 bytes is stored in the memory 14. This file is essentially a bit matrix, corresponding to the dot pattern according to which the recording surface of the chart is scanned.

If a line-by-line scanning unit is used, a dot pattern is obtained according to a Cartesian coordinate system having orthogonal x and y axes. In such a case, each pixel or scanned dot can be identified unambiguously, by means of a set of x and y parameters, with regard to its position in the file. The search according to the invention, under the control of the microprocessor or computer 12, for a reference representation to be used as the starting point for the interpretation of the stored digital representation of the scanned chart then results, for example when searching for the centre 4 of the chart, in a memory position corresponding to the coordinates Mx, My, where Mx and My are the coordinates of the dot of the pattern corresponding to the centre 4 of the chart.

By carrying out a rotation in steps of, for example, 0.25° from the centre of the chart, which corresponds to an angular rotation of the chart during one clock minute during the recording process, and by subsequently analysing, for each step, the memory positions corresponding to the dots of the pattern in the area between a first radius length $R_1$ and a second radius length $R_2$, it is possible, for example, to examine the first information track 5 for a recording. The other information tracks obviously correspond to other radial distances. See also Figure 1.

For a particular point with a radius R and an angle $\alpha$ relative to, for example, the fixed starting position 8 of a tachograph chart, it is now possible to determine the corresponding pixels from the x, y parameters:

$$x = Mx + R \cdot \cos \alpha,$$

and

$$y = My + R \cdot \sin \alpha,$$

which can then again be converted into corresponding memory positions.

To scan the whole chart in this way, it is necessary to carry out 1440 steps. It goes without saying that, if only a particular sector of the chart has to be read out, only a number of steps corresponding to the angular range encompassed by the sector in question has to be traversed. Obviously, it is also possible to employ steps of less than 0.25° or more than 0.25°, depending on the resolution of the scan or the number of dots of the pattern.

By scanning the chart 1 in a fixed position, the digital representations corresponding to markings can easily be traced in the memory 14 by using predetermined statistical data relating to the relative memory positions of the digital representation of a marking or markings.

It is then possible, by means of a mask representation of the marking or markings in question, to examine the contents of the memory positions in question for matching with the mask representation. It will be obvious that the search carried out in this way for a representation of a marking in the memory 14 can be carried out relatively quickly. By compiling the statistical information from scans of previous charts, individual tolerance variations in the scanning apparatus can readily be compensated.

A relatively fast and reliable method for tracing a reference representation, for example the representation of the centre 4 of the chart, is that in which, in the first instance, the memory positions of the representation of the pear-shaped aperture 3 are localised and subsequently the relative memory position or memory positions are traced in respect of the representation of at least one further marking present on the chart in a standard way, for example the starting position line 8. From the a priori known position of this at least one standard marking and the pear-shaped aperture 3, the memory position corresponding to the centre 4 of the chart can then be determined unambiguously. It is obviously also possible to indicate any other reference point on the chart as the starting point for the analysis of the memory content. The essential point is that the starting point for the analysis of data is determined from the scanned information itself, without the need to add flags or reference markers which in their turn have to be examined.

There may also be coupled to the microprocessor or computer 12, a monitor 15 or printer unit 16 for displaying the processed data, and, if required, a keyboard 17 or modem 18 for the purpose of supplementing the information scanned from the chart and relating to the vehicle parameters with data relating to the driver, the vehicle, or the information recorded by the driver in a so-called journey report.

All of this can then be displayed in alphanumeric form, the type of an event, the time the event occurred, and, for example, the interval between successive corresponding events being displayed as output variables. In order to prevent damage to the chart, such as scratches and the like, being detected as an event, it is possible to incorporate filtering, for example in such a way that events having a duration of less than, for example, one minute are not interpreted as such, it being assumed, therefore, that the preceding event is unaffected. Particular sections of the alphanumeric display may, if required, be presented in a different colour or typeface on the monitor or the printer.

Figure 3 shows a diagram of a scanning system 20 for scanning a tachograph chart, which system 20 comprises a frame 21 in which an optical scanning unit 10, shown by broken lines is placed. The system 20 further comprises a support 22, in the form of an approximately square metal or plastic slide, of which the part 23 is made of optically transparent material, such as, for example, glass or Perspex, for receiving the recording surface of a tachograph chart to be scanned. The support or slide 22 is further provided with a pear-shaped boss 24 which, in the embodiment shown, is glued to the part 23 and whose dimensions correspond to the pear-shaped aperture 3 of a tachograph chart. This ensures that a chart is always scanned in a fixed position. In order to scan a chart placed on the support or slide 22, said chart is moved in the frame 21 within the range of the scanning unit 10.

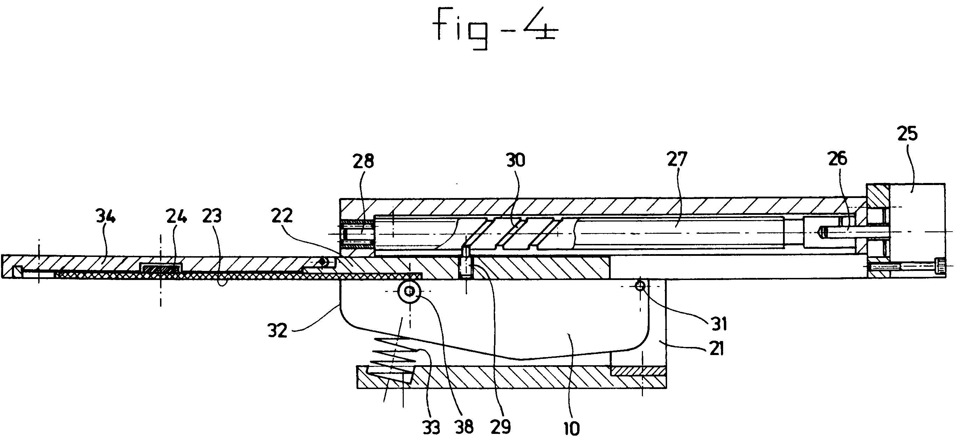

Figure 4 shows a cross-section along the line IV-IV in Figure 3. For the purpose of moving the support or slide 22, an electric motor 25 is fixed to the rack 21, whose shaft 26 is coupled to a threaded spindle 27. At its free end, this threaded spindle 27 is rotatably supported by means of a sliding bearing 28. The support 22 is provided with a pin 29 which engages the thread 30 of the threaded spindle 27. Depending on the sense of rotation of the electric motor 25 or the threaded spindle 27, the support is displaced linearly in the direction towards or in the direction away from the frame 21.

The scanning unit 10 is attached in the form of a hinge by one side 31 to the frame 21, while the opposite side 32 is held, by means of a spring 33, against that side of the support 22 which is partly made of optically transparent material. The support 22 is further provided with a flap 34, for the purpose of positioning a chart to be scanned between said flap and the surface 23. This flap 34 is represented in Figure 3 in partial cutaway form.

Figure 5 shows a view along the line V-V in Figure 3, in which it can be seen that, for the purpose of mounting the support or slide 22, rails 35 are fixed to the rack 21, which are engaged by guide rollers 36 fixed to the support or slide 22. The guide rollers 36 and the guide rails 35 are provided with a guiding surface 37 which is essentially V-shaped. This achieves stable guidance of the support or slide 22, in such a way that it can be displaced, if required, at a constant speed by means of the electric motor 25 and the threaded spindle 27.

In the preferred embodiment of the invention, a chart positioned on the support 22 is scanned via the scanning unit 10 while the support or slide 22 is displaced in the direction towards the rack 21. Subsequently, the support or slide 22 is returned to its position shown in Figure 4, after which the chart can be removed and, if required, another chart can be placed on the support or slide 22 in order to be scanned. In order to detect the end positions of the support or slide 22, two optical sensors are installed in the frame 21 (not shown). Obviously it is also possible to use other detection means suitable for this purpose. The electric motor 25, supported by the two sensors, is preferably controlled with the aid of the same microprocessor or computer 12 which also analyses the scanned data. This is not, however, necessary per se, because the scanning of a chart can, in principle, take place independently of the further processing.

In one practical embodiment, use is made of a scanning unit of the ScanMan$^R$ type from Logitech. This scanning unit is provided with a runner 38 by means of which the line-by-line scanning is controlled on the basis of the displacement speed of the support or slide 22. Because the slide mechanism can be displaced at an essentially constant speed, this runner 38 is in fact superfluous. Retaining the runner 38, however, implies less stringent requirements regarding the accuracy of the speed at which the support 22 is moving. Moreover, an adaptation will mean an (unnecessary) modification of a standard component.

In a practical embodiment, the scanning unit has the dimensions of a standard full-height chart drive which can be incorporated into a standard 6-inch rack in a personal computer.

The optical scanning unit 10 comprises a lamp which illuminates the image to be scanned, in this case the tachograph chart 1. The light reflected by the image is subsequently deflected via a mirror to a lens. Behind this lens is an electronic circuit which converts the optical signals received into a digital signal. The control unit 11 can be used, inter alia, to switch the lamp on and off, to set scanning parameters, to interrogate the status of the scanning process, and to store the digitised optical signal in the memory 14.

It goes without saying that the invention is not limited to the preferred embodiments as described or to the scanning of tachograph charts having a pear-shaped aperture 3 as illustrated, but that it can be modified and/or supplemented in various ways without deviating from the principle of the invention.

## Claims

1.  Method for the computer-assisted processing of data graphically recorded on a tachograph chart, the chart being scanned optically according to a dot pattern encompassing, wholly or partly, at least the recording surface of the chart, and the optical signal obtained being converted into an electrical signal corresponding to the scanned graphical data, said electrical signal being stored under the control of the computer in a memory for further processing, characterised in that a digital representation is formed of all the dots scanned and is stored in the memory for further processing.

2.  Method according to Claim 1 wherein, the further processing comprises the localisation, in the stored digital representation, of the relative memory position or memory positions of a digital part-representation corresponding to a marking or to markings present on the chart and, based thereon, the determination of the relative memory position or memory positions of a reference representation as the starting point for the interpretation of the stored digital representation of the graphical data of said chart.

3.  Method according to Claim 2, for processing charts having an aperture in the centre, said aperture being used as marking for the rough determination of the reference representation, the relative memory position or memory positions of the digital representation of at least one further standard marking present on the chart being determined on the basis of the localised relative memory positions of the digital part-representation corresponding to said aperture.

4.  Method according to Claim 3, in which the relative memory position of the digital representation corresponding to the centre of the chart is determined as a reference representation.

5.  Method according to Claim 3 or 4, wherein the chart is scanned in a predetermined fixed position, the localisation of the relative memory position or memory positions of the digital representation of the markings being achieved by using predetermined statistical data relating to the relative memory positions of the markings in the stored digital representation of the chart, the digital part-representation stored in the memory positions which, according to the statistical data, are eligible being compared, with the aid of a mask representation of the markings, for matching with said mask representation.

6.  Method according to Claim 5, wherein the statistical data being compiled from previous scans of charts.

7.  Method according to one or more of the preceding claims, wherein the dot pattern has a matrix form composed of rows and columns, the digital representation being stored in the memory corresponding to the order of the dots, in such a manner that each dot of the pattern corresponds to a relative memory position and is represented by a 1-bit digital representation.

8. Method according to Claim 7 in appendancy of Claim 5 and Claim 4, wherein the stored digital representation of the graphical data is analysed in accordance with the step-wise tangential traversal, from the centre of the chart and the fixed starting position thereof, of the whole chart area or of part thereof, the digital part-representation, stored at the relative memory positions corresponding to the dots obtained from the corresponding step-wise tangential traversal of the dot pattern, being analysed.

9. Method according to Claim 8, wherein the digital part-representation, stored at relative memory positions corresponding to information tracks situated in radial direction of the chart, is analysed.

10. Method according to Claim 9, wherein the relative memory positions associated with an information track are determined roughly with the aid of a mask representation of said information track.

11. Method according to Claim 8, 9 or 10, wherein the analysis of the digital part-representation corresponding to selected graphical data comprises the presentation, in alphanumeric form, of one or more of the following parameters:
    - the type of an event, based on the information track in question and on the digital part-representation of the data recorded therein;
    - the time that the event occurred, based on the number of tangential steps from the starting position up to the occurrence of the event;
    - the time between successive corresponding events, based on the number of tangential steps between corresponding digital part-representations of the information track in question.

12. Method according to Claim 11, wherein events having a duration which is less than a predetermined timespan are interpreted as one continuous event.

13. Method according to Claim 11 or 12, wherein the alphanumeric presentation is combined with further information stored in the memory to produce a journey report.

14. Method according to Claim 13, wherein the further information is stored by means of a keyboard under the control of the computer.

15. Method according to Claim 11, 12, 13 or 14, wherein selectable parts of the alphanumeric presentation are reproduced on a monitor or a printer as a display with a different colour or form.

16. Device for scanning data graphically recorded on a tachograph chart, comprising optical scanning means, means for supporting a chart to be scanned, and means for converting the optical signal obtained into a digital signal, characterised in that the support means are constructed in the form of a slide mechanism comprising a frame having bearing means for the movable bearing of the slide, the part of said slide which is intended to support the chart being made of optically transparent material for receiving the recording surface of the chart, and having driving means for bringing the slide into a position which is accessible from outside the frame, for receiving the chart to be scanned, and by means of which the slide, for scanning the chart, can be brought within the range of the scanning means mounted in the frame.

17. Device according to Claim 16, wherein the driving means for moving the slide comprise an electric motor for driving a threaded spindle, the slide being provided with a pin engaging the thread of the threaded spindle, in such a manner that the rotation of the threaded spindle results in a linear movement of the slide.

18. Device according to Claim 16 or 17, wherein the frame, for the purpose of bearing the slide, is provided with guide rails and the slide comprises guide rollers, provided with a guiding surface corresponding to the rails.

19. Device according to Claim 17, wherein the guide rails and the guide rollers have an essentially V-shaped guiding surface.

20. Device according to one or more of Claims 16 to 19 inclusive, wherein the slide is provided with a positioning boss for the purpose of positioning the tachograph chart to be scanned.

21. Device according to one or more of Claims 16 to 20, wherein the slide is provided with a flap mechanism, for the purpose of receiving a chart to be scanned between said flap and the supporting part of the slide.

22. Device according to one or more of Claims 16 to 20, wherein the scanning means are of the type having a scanning window for line-by-line scanning, control means being provided for scanning a chart by moving the slide past the scanning window of the scanning means which are mounted in a fixed position in the frame.

23. Device according to one or more of the preceding claims, provided with a processor for controlling the driving means of the slide mechanism and for processing the signal from the scanning means, and having memory means for storing therein, under the control of the processor, the digital representation of a scanned chart.

24. Device according to Claim 23 in appendance of Claim 22, wherein the chart is scanned as the slide is moved from its externally accessible position into the frame, the slide, after scanning, being returned to its position which is accessible from outside the frame.

25. Device according to Claim 23 or 24, provided with input means for inputting further data to be processed and/or output means for outputting processed data of a scanned chart.

fig-1

fig-2

Fig-3

23

24

22

20

34

36

21

10

36

Fig-5

35

21

36

37

22

33

Fig-4

EP 0 550 080 A1

EP 0 550 080 A1

**European Patent Office**

## EUROPEAN SEARCH REPORT

Application Number

EP  92 20 3205

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X,D | WO-A-8 603 867 (TACHANALYSIS)<br>* page 2, line 18 - page 5, line 12; figures * | 1 | G07C5/00<br>G06K11/00 |
| Y,D | | 16,17,22 | |
| A,D | | 2,4 | |
| | --- | | |
| X,D | US-A-3 829 660 (RUHL)<br>* column 2, line 14 - column 4, line 8; figures * | 1 | |
| A,D | | 16 | |
| | --- | | |
| X,D | US-A-3 908 081 (GREENSBERG)<br>* column 3, line 50 - column 5, line 48; figures * | 1 | |
| A,D | | 16 | |
| | --- | | |
| Y | WO-A-8 001 328 (NCR)<br>* page 8, line 24 - page 9, line 12 *<br>* page 10, line 27 - page 11, line 21; figures * | 16,17,22 | |
| A | | 1-5,23 | TECHNICAL FIELDS SEARCHED (Int. Cl.5) |
| | --- | | |
| A | EP-A-0 130 391 (ANDROS RESEARCH)<br>* page 2, line 25 - page 5, line 14 *<br>* page 27, line 27 - page 29, line 3; figures * | 1,2,16 | G07C<br>G06K<br>G11B |
| | --- | | |
| A | US-A-3 721 881 (CRITSER)<br>* abstract; figures 8,9 * | 1,16-19 | |
| | --- | | |
| A | EP-A-0 112 403 (IBM DEUTSCHLAND)<br>* page 3, line 17 - page 7, line 4; figures * | 1,16 | |
| | --- | | |
| A | EP-A-0 301 909 (GENERAL ELECTRIC) | | |
| | --- | | |
| A | EP-A-0 176 449 (GASO) | | |

The present search report has been drawn up for all claims

| Place of search | Date of completion of the search | Examiner |
|---|---|---|
| THE HAGUE | 04 MAY 1993 | MEYL D. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)

13